# EUROPÄISCHE PATENTSCHRIFT

(11) **EP 3 759 187 B1**
(45) Veröffentlichungstag und Bekanntmachung des Hinweises auf die Patenterteilung: **09.08.2023**
(21) Anmeldenummer: 19709638.1
(22) Anmeldetag: 25.02.2019
(51) Int. Cl.: C09J 7/21, D03D 11/00, C09J 7/29, H02G 3/04, D03D 15/50

(54) **KLEBEBAND**
ADHESIVE STRIP
RUBAN ADHÉSIF

(30) Priorität: 02.03.2018 DE 202018101168 U
(43) Veröffentlichungstag der Anmeldung: 06.01.2021
(73) Patentinhaber: Certoplast Technische Klebebänder GmbH, 42285 Wuppertal (DE)
(72) Erfinder: LEERMANN, Timo, 42369 Wuppertal (DE); RAMBUSCH, René, 42113 Wuppertal (DE)
(74) Vertreter: Andrejewski - Honke Patent- und Rechtsanwälte Partnerschaft mbB
(86) Internationale Anmeldenummer: PCT/EP2019/054614
(87) Internationale Veröffentlichungsnummer: WO 2019/166369

(56) Entgegenhaltungen:
- EP-A1- 2 647 749
- EP-A1- 2 722 374
- EP-A2- 1 136 535

## Beschreibung

Die Erfindung betrifft die Verwendung eines Klebebandes als Wickelband zum Ummanteln von Kabeln in Automobilen, mit einem textilen Träger, welcher wenigstens ein erstes Gewebe und ein zweites Gewebe aufweist, die miteinander verbunden sind, und mit einer Klebebeschichtung auf wenigstens einer Seite des Trägers, wobei die Fäden des jeweiligen Gewebes eine Feinheit von mehr als 100 dtex aufweisen.

An Klebebänder und insbesondere Wickelbänder zum Ummanteln von Kabeln in Automobilen werden vielfältige Anforderungen gestellt. So kommt es nicht nur beispielsweise auf eine erforderliche Medienbeständigkeit gegenüber beispielsweise Öl, Benzin oder Diesel an, sondern wird auch Temperaturbeständigkeit über einen großen Temperaturbereich von in der Regel minus 50° C bzw. minus 40° C bis plus 150° C und mehr gefordert. Außerdem müssen derartige Klebebänder alterungsbeständig sein.

Daneben werden heutzutage erhöhte Anforderungen an die Abriebbeständigkeit gestellt. Das ergibt sich unter anderem aufgrund der zunehmenden Ausrüstung von Kraftfahrzeugen mit Elektrokomponenten und damit einhergehend ausladenden Kabelbäumen. Da der Einbauraum begrenzt ist, kann es zu Scheuerbeanspruchungen der Kabel kommen. Dem wird durch eine erhöhte Abriebbeständigkeit der Klebebänder bzw. Wickelbänder zum Ummanteln der Kabel entgegengewirkt.

Im Stand der Technik wird in der WO 2005/085379 A1 ein gattungsgemäßes Klebeband beschrieben, welches insgesamt hoch abriebfest ausgelegt sein soll.

Das wird dadurch erreicht, dass insbesondere ein PET-Filamentgewebe als erstes Gewebe mit einem ebenfalls als PET-Filamentgewebe ausgebildeten zweiten Gewebe über eine Zwischenschicht gekoppelt ist. Bei der Zwischenschicht kann es sich um eine Klebeschicht oder auch ein poröses Flächengebilde mit einer offenen, aber stabilen dreidimensionalen Struktur aus einem Schaumstoff oder einer geschäumten Folie handeln. Die Herstellung eines solchen Laminatgewebes aus den wenigstens zwei Geweben bzw. Gewebeschichten ist jedoch aufwendig.

Die nächstkommende und gattungsbildende EP 2 722 374 A1 betrifft ein vergleichbares Klebeband, welches über eine erste aus einem Gewebe bestehende textile Schichtlage und eine zweite textile Schichtlage verfügt, die vollflächig durch eine Klebverbindungsschicht fest miteinander verbunden sind. Bei der zweiten textilen Schichtlage kann es sich um das gleiche Gewebe wie bei der ersten textilen Schichtlage handeln. Dadurch soll eine besonders hohe Abriebfestigkeit zur Verfügung gestellt werden und das Klebeband sowohl manuell als auch maschinell leicht verarbeitet werden können und über eine geringe Dicke verfügen.

Der weitere Stand der Technik nach der EP 1 136 535 A2 betrifft ein Klebeband zum Ummanteln von beispielsweise Kabeln in Automobilen, welches mit einem Trägerband auf Veloursbasis ausgerüstet ist. Zwischen einer Klebebeschichtung und dem Trägerband ist eine das Velours verfestigende, nicht textile Maschengrundschicht angeordnet. Das an dieser Stelle realisierte Wirkwaren-Velours verfügt über nach außen weisende Veloursschlingen, die eine äußere Barre bilden. Außerdem können die Veloursschlingen nicht nur in die äußere Barre, sondern auch in eine darunter liegende erste Barre eingewirkt sein.

Andere Ansätze im Stand der Technik zur Erhöhung nicht nur der Abriebfestigkeit, sondern auch um allgemein besondere mechanische Beanspruchungen durch Unfälle, Vibrationen, Scheuern, Stich, Schnitt und Biss zu beherrschen, zielen auf eine Schutzvorrichtung ab, wie sie in der WO 2009/086570 A1 beschrieben wird. Die Schutzvorrichtung besteht aus zumindest einem Verbund, der eine anorganische Faser enthaltende mechanische Schutzschicht, eine direkt mit der Schicht verbundene polymere Verbindungsschicht mit Isolierwirkung sowie eine direkt mit der Schicht verbundene Klebeschicht aufweist. Auch in diesem Fall ist die Herstellung besonders aufwendig.

Im Rahmen der EP 2 647 749 A1 wird zwar die Verringerung der Produktionskosten verfolgt. Dazu kommt jedoch ein Schlauchgewebe als Schutzummantelung zum Einsatz. Das Schlauchgewebe wird zu diesem Zweck geschrumpft.

Neben der bereits beschriebenen Abriebbeständigkeit kommt es heutzutage bei Klebebändern oder allgemein Schutzumhüllungen für Kabel zunehmend darauf an, mechanische Beanspruchungen durch insbesondere Unfälle, also Schlagbeanspruchungen, zu beherrschen. Diese wachsenden Anforderungen lassen sich im Kern darauf zurückführen, dass zunehmend bei Elektromobilen aber auch herkömmlichen Kraftfahrzeugen sicherheitsrelevante Bauteile wie beispielsweise Türschlösser überwiegend elektrisch betrieben werden oder ein ausschließlich elektrischer Betrieb angestrebt wird. Im Crashfall und beispielsweise bei einem Seitenaufprall kann dies zu Problemen dergestalt führen, dass elektrische Leitungen zur Spannungsversorgung beispielsweise des Türschlosses reißen, beschädigt werden oder sonst wie in ihrer Funktionsfähigkeit eine Beeinträchtigung erfahren. Das kann dann dazu führen, dass das fragliche Türschloss nicht mehr funktioniert und eine zugehörige Kraftfahrzeugtür vom Rettungspersonal nicht oder nur unter erheblichen Schwierigkeiten geöffnet werden kann. Die bisherigen Lösungen insbesondere nach der WO 2005/085379 A1 oder auch der WO 2009/086570 A1 sind an dieser Stelle wenig überzeugend bzw. nur mit gesteigertem Aufwand zu realisieren. Hier will die Erfindung insgesamt Abhilfe schaffen.

Der Erfindung liegt das technische Problem zugrunde, ein derartiges Klebeband und insbesondere Wickelband zum Ummanteln von Kabeln in Automobilen so weiterzuentwickeln, dass bei unverändert gegebener hoher Abriebbeständigkeit insbesondere mechanische Beanspruchungen im Zuge eines Crashs mit gegenüber dem Stand der Technik verringertem Herstellungsaufwand beherrscht werden.

Zur Lösung dieser technischen Problemstellung schlägt die Erfindung bei der gattungsgemäßen Verwendung vor, dass die beiden Gewebe ausschließlich durch gewebeeigene Verbindungsfäden miteinander verbunden sind.

Die Erfindung greift also zunächst einmal auf einen speziell aufgebauten textilen Träger zurück, welcher im Endeffekt als Laminat aus zumindest dem ersten Gewebe und dem zweiten Gewebe aufgebaut ist. Tatsächlich kann auch von einem zumindest zweischichtig aufgebauten Träger aus den beiden Geweben bzw. Gewebeschichten gesprochen werden. Der Begriff "Laminat" impliziert also nicht notwendigerweise eine Verklebung beider Schichten. Im Regelfall ist der textile Träger erfindungsgemäß und abschließend aus dem ersten und zweiten Gewebe aufgebaut, die den zweischichtigen Träger definieren sowie ausschließlich durch die gewebeeigenen Verbindungsfäden klebstofffrei miteinander verbunden sind.

Selbstverständlich können auch noch mehr als zwei Gewebeschichten zum Einsatz kommen, beispielsweise ein drittes Gewebe und auch ein viertes Gewebe, falls erforderlich. Im Regelfall reichen jedoch zwei Gewebeschichten aus dem ersten Gewebe und dem zweiten Gewebe aus, um die erforderliche Abriebbeständigkeit ebenso wie eine erhöhte Schlagfestigkeit und mithin Beständigkeit gegenüber mechanischer Beanspruchung insbesondere bei einem Unfall zur Verfügung zu stellen.

Im Rahmen der Erfindung werden nun diese beiden Gewebe bzw. Gewebeschichten im Gegensatz zum Stand der Technik beispielsweise nach der WO 2005/085379 A1 nicht durch eine Klebeschicht oder ein poröses Flächengebilde aus einem Schaumstoff oder einer geschäumten Folie miteinander gekoppelt. Vielmehr greift die Erfindung an dieser Stelle auf gewebeeigene Verbindungsfäden zurück, die die beiden Gewebe bzw. Gewebeschichten mechanisch miteinander koppeln. Bei den gewebeeigenen Verbindungsfäden handelt es sich folglich um Kett- und/oder Schussfäden des ersten Gewebes, des zweiten Gewebes oder auch beider Gewebe.

Auf diese Weise lässt sich der erfindungsgemäß eingesetzte textile Träger für das Klebeband besonders einfach und kostengünstig herstellen, nämlich im Endeffekt im Zuge eines (modifizierten) Webprozesses. Zusätzliche Beschichtungen und die zunächst separate Herstellung der Gewebeschichten sowie ihrer anschließende Verbindung sind folglich insgesamt entbehrlich. Grundsätzlich können im Rahmen der Erfindung das erste Gewebe und das zweite Gewebe zusätzlich zu den gewebeeigenen Verbindungsfäden für die mechanische Kopplung auch über eine ergänzend vorgesehene Verbindungsschicht aus beispielsweise einem Adhäsivmittel miteinander gekoppelt werden.

Im Regelfall sorgen jedoch ausschließlich die Verbindungsfäden dafür, dass die beiden Gewebe bzw. Gewebeschichten miteinander mechanisch gekoppelt werden. Dann kann auf den einzigen Webprozess ohne zusätzliche Laminiervorgänge vorteilhaft zurückgegriffen werden.

Als weitere Besonderheit schlägt die Erfindung vor, dass die beiden Gewebe bzw. Gewebeschichten jeweils die gleiche Bindung aufweisen. Tatsächlich empfiehlt die Erfindung grundsätzlich den Rückgriff auf die aus der Weberei bekannten Grundbindungen, nämlich die Leinwandbindung, Köperbindung oder auch Atlasbindung für das jeweilige Gewebe. Das heißt, beide Gewebe können beispielsweise mit einer Leinwandbindung ausgerüstet sein.

Nach besonders vorteilhafter Ausgestaltung hat es sich jedoch bewährt, wenn die beiden Gewebe eine unterschiedliche Bindung aufweisen. Beispielsweise mag das erste Gewebe bzw. die erste Gewebeschicht eine Leinwandbindung aufweisen. Demgegenüber kann die zweite darunter angeordnete Gewebeschicht bzw. das zweite Gewebe mit einer Atlasbindung bzw. speziell einer Satinbindung ausgerüstet werden. Auf diese Weise lässt sich der Träger und mithin das gesamte Klebeband mechanisch besonders stabil ausrüsten, insbesondere im Hinblick auf etwaige Schlagbeanspruchungen.

Hierbei macht die Erfindung von der Erkenntnis Gebrauch, dass die beim Ummanteln von Kabeln meistens außen platzierte Leinwandbildung bei einer Schlagbeanspruchung im Bereich der angreifenden Kraft "geöffnet" wird. Da das in Schlagrichtung darunter angeordnete zweite Gewebe bzw. die Atlasbindung bzw. Satinbindung demgegenüber anders aufgebaut ist, zeigt diese ein anderes Öffnungsverhalten bei der beschriebenen Schlagbeanspruchung, so dass insgesamt die Stabilität gegenüber solchen Schlagbeanspruchungen ohne Zusatzmaßnahmen signifikant gesteigert werden kann.

Tatsächlich zeichnet sich die typischerweise nach außen beim Ummanteln von Kabeln weisende erste Gewebeschicht bzw. das erste Gewebe in Leinwandbindung dadurch aus, dass der jeweilige Schussfaden abwechselnd über und unter den einzelnen Kettfäden hindurchgeht. Dadurch sehen beide Seiten des ersten Gewebes gleich aus. Demgegenüber ist das darunter befindliche zweite Gewebe bzw. die zweite Gewebeschicht vorteilhaft mit einer Atlasbindung bzw. Satinbindung ausgerüstet. Hier wird der jeweilige Schussfaden unter einem Kettfaden hindurchgeführt und danach über mehr als zwei Kettfäden hinweg. Der nächste Schussfaden verlagert dieses Bindungsmuster um mindestens zwei Kettfäden in der Regel nach rechts und auch nach oben, in der Regel um eins. Dadurch entsteht als zweites Gewebe bzw. zweite Gewebeschicht mit der Atlas- bzw. Satinbindung ein Gewebe, bei dem auf der Oberseite, das heißt in Richtung auf das erste Gewebe die parallelen Schussfäden bei Weitem überwiegen. Demgegenüber überwiegen auf der Rückseite entsprechend die Kettfäden.

So oder so führt die Reihenfolge Leinwandbindung-Atlasbindung oder auch Leinwandbindung-Köperbindung insgesamt dazu, dass ein derart zweischichtig aufgebautes Gewebe bei einer Schlagbeanspruchung zunächst das erste Gewebe in der Leinwandbindung öffnet und danach eine hiervon abweichende Öffnung des darunter befindlichen zweiten Gewebes mit der Atlasbindung bzw. Köperbindung beobachtet wird. Diese unterschiedlichen Öffnungsvorgänge führen in Verbindung mit der Kopplung der beiden Gewebe untereinander mithilfe der Verbindungsfäden insgesamt dazu, dass Schlagbeanspruchungen, wie sie beispielsweise bei einem Unfall beobachtet werden, besonders wirkungsvoll beherrscht und aufgenommen werden.

Da darüber hinaus die Fäden des jeweiligen Gewebes als Polyesterfaden oder auch Polyamidfaden ausgebildet sind sowie zusätzlich bedarfsweise anorganische Fäden wie Metallfäden, Carbonfäden oder auch Glasfäden sowie insgesamt Kombinationen beim Webprozess Berücksichtigung finden können, wird auch eine erhöhte Abriebbeständigkeit beobachtet. Das heißt, das erfindungsgemäße Klebeband kombiniert zum ersten Mal nicht nur die Erfüllung automobiltypischer Anforderungen wie Medienbeständigkeit, Temperaturbeständigkeit und Klapperschutz mit zugleich erhöhter Abriebbeständigkeit und im Vergleich zum bisherigen Stand der Technik deutlich gesteigerter Schlagfestigkeit, wie sie beispielsweise nach der Norm LV 312-3 gemessen werden kann. Das war bisher nicht zu erwarten und auch nicht möglich.

Der textile Träger verfügt in der Regel über ein Flächengewicht von 100 g/m² bis 250 g/m² und vorzugsweise bis zu 500 g/m². Die Fäden des jeweiligen Gewebes weisen erfindungsgemäß eine Feinheit von wenigstens 100 dtex auf. In der Regel verfügen die Fäden des Gewebes über eine Feinheit von mehr als 150 dtex. Dabei hat es sich zusätzlich als besonders günstig erwiesen, wenn mit Fäden unterschiedlicher Feinheit gearbeitet wird.

Beispielsweise kann bei Bedarf mit dickeren Schussfäden als Kettfäden gearbeitet werden. In der Regel verfügen jedoch die Kett- und Schussfäden beider Gewebe über eine übereinstimmende Feinheit. Das gilt dann auch für die Verbindungsfäden. Tatsächlich können die Verbindungsfäden als Kett- und/oder Schussfäden des ersten Gewebes oder auch des zweiten Gewebes ausgebildet sein. Grundsätzlich ist es aber auch möglich, dass die Verbindungsfäden als Kett- und/oder Schussfäden sowohl des ersten Gewebes als auch des zweiten Gewebes ausgebildet werden.

Dabei kann im Detail so vorgegangen werden, dass die Verbindungsfäden als Schussfäden des ersten Gewebes ausgebildet sind, die einen oder mehrere Kettfäden des zweiten Gewebes kreuzen. Grundsätzlich können die Verbindungsfäden aber auch als Kettfäden des ersten Gewebes ausgebildet sein, die einen oder mehrere Schussfäden des zweiten Gewebes kreuzen. Darüber hinaus kann es sich bei den Verbindungsfäden um Schussfäden des zweiten Gewebes handeln, die einen oder mehrere Kettfäden des ersten Gewebes kreuzen. Ebenso ist es denkbar, dass die Verbindungsfäden als Kettfäden des zweiten Gewebes ausgebildet sind, die einen oder mehrere Schussfäden des ersten Gewebes kreuzen. Daneben sind prinzipiell auch Mischformen denkbar.

Bei dem eingesetzten Klebstoff bzw. der Klebebeschichtung handelt es sich um eine solche, die vollflächig oder als Streifenbeschichtung vorteilhaft auf die Rückseite des zweiten Gewebes aufgebracht wird. Darüber hinaus liegt es im Rahmen der Erfindung, das nach außen weisende erste Gewebe mit einer zusätzlichen Beschichtung, beispielsweise einer Elastomerbeschichtung, einer Lackfolie oder Lackschicht auszurüsten, falls dies erforderlich ist. Darüber hinaus können die einzelnen Fäden des Gewebes bei Bedarf eingefärbt werden, wobei auch unterschiedliche Färbungen für das erste Gewebe und das zweite Gewebe möglich sind, um die Anzahl der denkbaren Farbkombinationen zu erhöhen.

Die Klebebeschichtung kann insgesamt auf den textilen Träger mit einem Flächengewicht von 50 g/m² bis 200 g/m² aufgebracht werden. Als mögliche und geeignete Kleber haben sich insbesondere druckempfindliche Klebstoffe wie Acrylatklebstoffe als besonders günstig erwiesen. Diese lassen sich beispielsweise über Direktbeschichtung, Kontaktbeschichtung oder auch als Schmelzbeschichtung mit anschließender UV-Vernetzung auf den textilen Träger aufbringen. Grundsätzlich ist auch eine indirekte Beschichtung im Zuge einer Transferbeschichtung möglich.

Das erfindungsgemäße Klebeband kann prinzipiell als spiral- oder wendelförmig um Kabel geführtes Wickelband ausgebildet sein. Alternativ hierzu kann mithilfe des Klebebandes auch eine Längsumhüllung realisiert werden. In diesem Fall wird das Klebeband in Längsrichtung um die zu ummantelnden Kabel geschlungen.

Im Folgenden wird die Erfindung anhand einer lediglich ein Ausführungsbeispiel darstellenden Zeichnung näher erläutert; es zeigen:
- Fig. 1: das erfindungsgemäße Klebeband schematisch im Schnitt,
- Fig. 2: die beiden miteinander verbundenen Gewebe des textilen Trägers vor ihrer Vereinigung und
- Fig. 3: den erfindungsgemäßen Träger mit den Verbindungsfäden zur Kopplung der beiden Gewebe.

In den Figuren ist ein Klebeband dargestellt, bei dem es sich vorteilhaft um ein Wickelband zum Ummanteln von Kabeln in Automobilen handelt. Das Wickelband kann dabei grundsätzlich im Sinne einer Längsumhüllung oder Schlauchumhüllung in Längsrichtung um die zu ummantelnden Kabel geschlungen werden. Alternativ hierzu lässt sich das dargestellte und nachfolgend noch näher zu beschreibende Klebeband auch spiralförmig oder wendelförmig um die zu ummantelnde Kabel herumwickeln. So wird meistens vorgegangen.

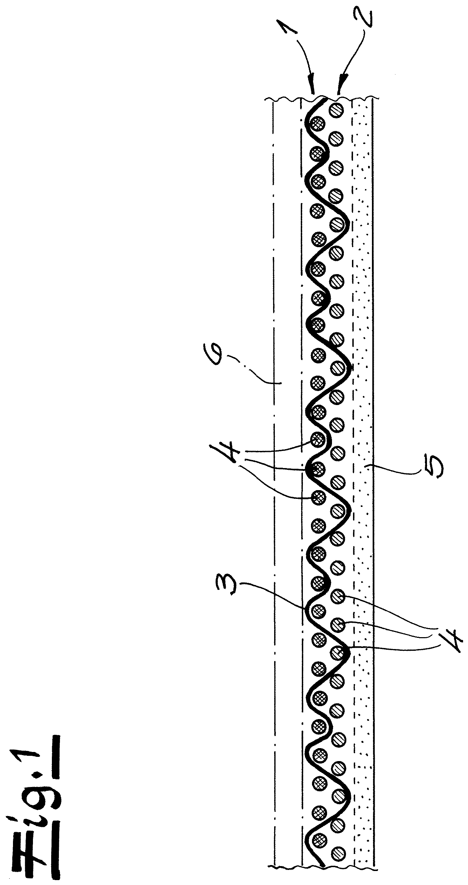

Das erfindungsgemäße Klebeband verfügt über einen textilen Träger 1, 2. Der textile Träger setzt sich nach dem Ausführungsbeispiel und nicht einschränkend aus einem ersten Gewebe 1 und einem zweiten Gewebe 2 zusammen. Beide Gewebe 1, 2 bzw. Gewebeschichten sind erfindungsgemäß mechanisch miteinander gekoppelt, nämlich über gewebeeigene Verbindungsfäden 3. Das ist in der Fig. 1 angedeutet. Tatsächlich handelt es sich bei dem dort dargestellten Verbindungsfaden 3 um einen Schussfaden 3 des ersten Gewebes 1, welcher einen oder mehrere Kettfäden 4 des zweiten Gewebes 2 wie angedeutet kreuzt. Man erkennt in der Schnittdarstellung nach der Fig. 1 jeweils im Schnitt die Kettfäden 4 von einerseits dem ersten Gewebe 1 und andererseits dem zweiten Gewebe 2. Dagegen sind die zugehörigen Schussfäden 3 der Gewebe 1, 2 nicht explizit dargestellt, wird aus Gründen der Deutlichkeit lediglich der eine Verbindungsfaden bzw. Schussfaden 3 beispielhaft wiedergegeben.

Der textile Träger 1, 2 des erfindungsgemäßen Klebebandes ist mit einer Klebebeschichtung 5 ausgerüstet. Tatsächlich findet sich die Klebebeschichtung 5 vollflächig oder als Streifenbeschichtung auf der Rückseite des zweiten Gewebes bzw. der zweiten Gewebeschicht 2. In montiertem Zustand des erfindungsgemäßen Klebebandes weist das erste Gewebe bzw. die erste Gewebeschicht 1 nach außen hin. Zum Schutz dieses ersten Gewebes 1 kann grundsätzlich auch noch eine Beschichtung 6 vorgesehen sein, die in der Fig. 1 strichpunktiert angedeutet wird. Im Regelfall ist eine solche zusätzliche Beschichtung 6 jedoch entbehrlich.

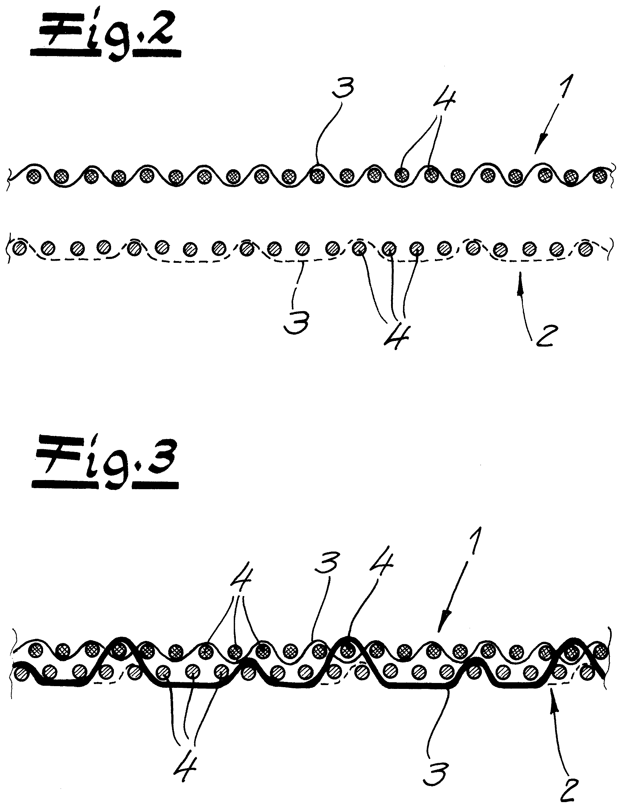

Anhand der Figuren 2 und 3 wird nun der Detailaufbau des Trägers 1, 2 deutlich. Tatsächlich erkennt man in der Fig. 2 die beiden Gewebe 1, 2 in Einzeldarstellung. Das erste Gewebe 1 ist dabei in Leinwandbindung ausgeführt. Das heißt, die einzelnen Schussfäden 3 gehen dabei abwechselnd über und unter den Kettfäden 4 hindurch. Demgegenüber verfügt das zweite Gewebe 2 über eine andere Bindung. Tatsächlich ist das zweite Gewebe 2 vorliegend mit einer Atlas- oder Satinbindung ausgerüstet. In diesem Fall führt der jeweilige Schussfaden 3 über einen Kettfaden 4 hinweg, danach unter mehr als zwei Kettfäden 4 hindurch.

In der Fig. 3 erkennt man nun, wie mithilfe des Verbindungsfadens bzw. Schussfadens 3 vorliegend des zweiten Gewebes 2 einzelne Kettfäden 4 des ersten Gewebes 1 gekreuzt werden und dadurch die gewünschte mechanische Kopplung zwischen den beiden Geweben 1, 2 hergestellt wird. Das heißt, die Fig. 3 zeigt eine etwas abgewandelte Ausführungsform im Vergleich zur Fig. 1 dergestalt, dass in diesem Fall der Verbindungsfaden 3 als Schussfaden des zweiten Gewindes 2 (mit der Atlas- bzw. Satinbindung) ausgebildet ist, welcher ein oder mehrere Kettfäden 4 des ersten Gewebes 1 kreuzt. Dagegen handelt es sich bei dem Verbindungsfaden 3 nach der Fig. 1 um einen Schussfaden des ersten Gewebes 1, welcher den einen oder die mehreren Kettfäden 4 des zweiten Gewebes 2 kreuzt. Beide grundsätzlichen Vorgehensweisen sind möglich.

Die Fäden des Gewebes 1, 2, also sowohl die Kettfäden 4 als auch die Schussfäden 3 ebenso wie die Verbindungsfäden 3 weisen insgesamt eine Feinheit von mehr als 100 dtex auf. Im Regelfall werden sogar Feinheiten von 200 dtex und mehr beobachtet. Die Fäden 3, 4 des Gewebes 1, 2 können als jeweils Polyesterfäden ausgebildet sein. Grundsätzlich kann es sich aber auch um Polyamidfäden handeln. Daneben sind auch anorganische Fäden 3, 4 wie Metallfäden, Carbonfäden, Glasfäden etc. möglich. Auch Kombinationen sind denkbar und werden von der Erfindung umfasst.

## Patentansprüche

1. Verwendung eines Klebebandes als Wickelband zum Ummanteln von Kabeln in Automobilen, mit einem textilen Träger (1, 2), welcher wenigstens ein erstes Gewebe (1) und ein zweites Gewebe (2) aufweist, die miteinander verbunden sind, und mit einer Klebebeschichtung (5) auf wenigstens einer Seite des Trägers (1, 2), wobei die Fäden (3, 4) des jeweiligen Gewebes (1, 2) eine Feinheit von mehr als 100 dtex aufweisen,
**dadurch gekennzeichnet , dass**
die beiden Gewebe (1, 2) ausschließlich durch gewebeeigene Verbindungsfäden (3) miteinander gekoppelt sind.

2. Verwendung nach Anspruch 1, **dadurch gekennzeichnet, dass** die Verbindungsfäden (3) als Kett- und/oder Schussfäden (3, 4) des ersten Gewebes (1) ausgebildet sind.

3. Verwendung nach Anspruch 1 oder 2, **dadurch gekennzeichnet, dass** die Verbindungsfäden (3) als Kett- und/oder Schussfäden (3, 4) des zweiten Gewebes (2) ausgelegt sind.

4. Verwendung nach einem der Ansprüche 1 bis 3, **dadurch gekennzeichnet, dass** die beiden Gewebe (1, 2) jeweils die gleiche Bindung aufweisen, beispielsweise eine Leinwandbindung, Köperbindung oder Atlasbindung.

5. Verwendung nach einem der Ansprüche 1 bis 3, **dadurch gekennzeichnet, dass** die beiden Gewebe (1, 2) eine unterschiedliche Bindung aufweisen.

6. Verwendung nach einem der Ansprüche 1 bis 5, **dadurch gekennzeichnet, dass** die Verbindungsfäden (3) als Schussfäden (3) des ersten Gewebes (1) ausgebildet sind, die einen oder mehrere Kettfäden (4) des zweiten Gewebes (2) kreuzen.

7. Verwendung nach einem der Ansprüche 1 bis 6, **dadurch gekennzeichnet, dass** die Verbindungsfäden (3) als Kettfäden (4) des ersten Gewebes (1) ausgebildet sind, die einen oder mehrere Schussfäden (3) des zweiten Gewebes (2) kreuzen.

8. Verwendung nach einem der Ansprüche 1 bis 7, **dadurch gekennzeichnet, dass** die Fäden (3, 4) des jeweiligen Gewebes (1, 2) eine Feinheit von 150 dtex und mehr aufweisen.

9. Verwendung nach einem der Ansprüche 1 bis 8, **dadurch gekennzeichnet, dass** die Fäden (3, 4) des jeweiligen Gewebes (1, 2) als Polyesterfäden und/oder Polyamidfäden und/oder anorganische Fäden wie beispielsweise Metallfäden, Carbonfäden oder Glasfäden sowie Kombinationen ausgebildet sind.

10. Verwendung nach einem der Ansprüche 1 bis 9, **dadurch gekennzeichnet, dass** das Klebeband als spiral- oder wendelförmig um Kabel geführtes Wickelband oder in Längsrichtung um die zu ummantelnden Kabel geschlungene Längsumhüllung ausgebildet ist.

## Claims

1. Use of an adhesive strip as winding tape for sheathing cables in automobiles, having a textile support (1, 2) that includes at least a first fabric (1) and a second fabric (2) which are connected to each other, and having an adhesive coating (5) on at least one side of the support (1, 2), wherein the threads (3, 4) of the respective fabrics (1, 2) have a linear density of more than 100 dtex,
**characterized in that**
the two fabrics (1, 2) are coupled together solely by connecting threads (3) intrinsic to the fabrics.

2. Use according to Claim 1, **characterized in that** the connecting threads (3) are embodied as warp and/or weft threads (3, 4) of the first fabric (1).

3. Use according to Claim 1 or 2, **characterized in that** the connecting threads (3) are designed as warp and/or weft threads (3, 4) of the second fabric (2).

4. Use according to any one of Claims 1 to 3, **characterized in that** the two fabrics (1, 2) each have the same weave, for example a plain weave, a twill weave or a satin weave.

5. Use according to any one of Claims 1 to 3, **characterized in that** the two fabrics (1, 2) have a different weave.

6. Use according to any one of Claims 1 to 5, **characterized in that** the connecting threads (3) are embodied as weft threads (3) of the first fabric (1), which intersect with one or more warp threads (4) of the second fabric (2) .

7. Use according to any one of Claims 1 to 6, **characterized in that** the connecting threads (3) are embodied as warp threads (4) of the first fabric (1), which intersect with one or more weft threads (3) of the second fabric (2) .

8. Use according to any one of Claims 1 to 7, **characterized in that** the threads (3, 4) of the respective fabric (1, 2) have a linear density greater than 100 dtex and in particular greater than 150 dtex and more.

9. Use according to any one of Claims 1 to 8, **characterized in that** the threads (3, 4) of the respective fabric (1, 2) are embodied as polyester threads and/or polyamide threads and/or inorganic threads such as for example metal threads, carbon threads or glass threads, and combinations thereof.

10. Use according to any one of Claims 1 to 9, **characterized in that** the adhesive strip is constructed as a spirally or helically shaped winding tape wound around cables or as a lengthwise sheathing intertwined longitudinally with the cables that are to be sheathed.

## Revendications

1. Utilisation d'une bande adhésive en tant que bande d'enroulement pour envelopper des câbles dans le secteur automobile, avec un support textile (1, 2), lequel comporte au moins un premier tissu (1) et un deuxième tissu (2), qui sont reliés entre eux et avec un revêtement adhésif (5) sur au moins un côté du support (1, 2), sachant que les fils (3, 4) du tissu respectif (1, 2) comportent une finesse de plus de 100 dtex,
**caractérisée en ce que**
les deux tissu (1, 2) sont exclusivement couplés l'un à l'autre par des fils d'armure (3) propres au tissu.

2. Utilisation selon la revendication 1, **caractérisée en ce que** les fils d'armure (3) sont constitués comme fils de chaîne et/ou fils de trame (3, 4) du premier tissu (1) .

3. Utilisation selon la revendication 1 ou 2, **caractérisée en ce que** les fils d'armure (3) sont conçus comme fils de chaîne et/ou fils de trame (3, 4) du deuxième tissu (2) .

4. Utilisation selon l'une quelconque des revendications 1 à 3, **caractérisée en ce que** les deux tissus (1, 2) comportent respectivement la même armure, par exemple une armure toile, une armure croisée ou une armure satin.

5. Utilisation selon l'une quelconque des revendications 1 à 3, **caractérisée en ce que** les deux tissus (1, 2) comportent une armure différente.

6. Utilisation selon l'une quelconque des revendications 1 à 5, **caractérisée en ce que** les fils d'armure (3) sont constitués sous la forme de fils de trame (3) du premier tissu (1), qui croisent un ou plusieurs fils de chaîne (4) du deuxième tissu (2).

7. Utilisation selon l'une quelconque des revendications 1 à 6, **caractérisée en ce que** les fils d'armure (3) sont constitués comme fils de chaîne (4) du premier tissu (1), qui croisent un ou plusieurs fils de trame (3) du deuxième tissu (2).

8. Utilisation selon l'une quelconque des revendications 1 à 7, **caractérisée en ce que** les fils (3, 4) du tissu respectif (1, 2) comportent une finesse de 150 dtex et plus.

9. Utilisation selon l'une quelconque des revendications 1 à 8, **caractérisée en ce que** les fils (3, 4) du tissu respectif (1, 2) sont constitués sous la forme de fils de polyester et/ou fils de polyamide et/ou fils anorganiques comme par exemple des fils métalliques, des fils de carbone ou des fils de verre ainsi que des combinaisons.

10. Utilisation selon l'une quelconque des revendications 1 à 9, **caractérisée en ce que** la bande adhésive est constituée sous la forme d'une bande d'enroulement passée en forme de spiral ou de façon hélicoïdale autour de câbles ou en direction longitudinale autour de l'enveloppe longitudinale enlacée aux câbles à envelopper.
